# FASCICULE DE BREVET EUROPEEN

(11) **EP 4 160 322 B1**
(45) Date de publication et mention de la délivrance du brevet: **25.06.2025**
(21) Numéro de dépôt: 21199688.9
(22) Date de dépôt: 29.09.2021
(51) Int. Cl.: G04B 35/00, G04B 13/02

(54) **RESSORT FREIN POUR ARBRE PORTEUR D'UN AFFICHEUR, MOUVEMENT HORLOGER COMPRENANT LEDIT RESSORT FREIN ET PROCEDE D'INSTALLATION DUDIT RESSORT FREIN**
BREMSFEDER FÜR TRÄGERWELLE EINER ANZEIGE, UHRWERK MIT DIESER BREMSFEDER UND EINBAUVERFAHREN DIESER BREMSFEDER
BRAKE SPRING FOR SUPPORTING SHAFT OF A DISPLAY, TIMEPIECE MOVEMENT COMPRISING SAID BRAKE SPRING AND METHOD FOR INSTALLING SAID BRAKE SPRING

(43) Date de publication de la demande: 05.04.2023
(73) Titulaire: ETA SA Manufacture Horlogère Suisse, 2540 Grenchen (CH)
(72) Inventeur: CHRISTAN, Julien, 2502 Bienne (CH); DELEVAUX, Fabrice, 2336 Les Bois (CH); POSTMUS, Mark, 2542 Pieterlen (CH)
(74) Mandataire: ICB SA

(56) Documents cités:
- EP-A1- 2 977 829
- EP-A1- 3 719 583
- CH-B1- 700 811

## Description

### Domaine technique de l'invention

L'invention relève du domaine de l'horlogerie, et concerne notamment un ressort frein pour un arbre porteur d'un afficheur, mouvement horloger comprenant ledit ressort frein et procédé d'installation dudit ressort frein.

### Arrière-plan technologique

Dans une montre à affichage analogique, les informations relatives à l'heure courante sont indiquées par des afficheurs, tels que des aiguilles, des disques, ou d'autres organes indicateurs. Des afficheurs peuvent également indiquer d'autres types d'informations, tels qu'une réserve de marche, un quantième, etc.

Afin de ne pas endommager le mouvement horloger, ni impacter la précision des informations qu'il délivre, les afficheurs ne doivent pas entrer en contact avec un obstacle lors de leur course. Un tel obstacle peut être formé, par exemple, par la glace, le cadran, un autre afficheur ou un composant du mouvement horloger.

Plusieurs facteurs peuvent donner lieu à une telle situation, tels que l'ébat de l'arbre qui porte les afficheurs, l'inclinaison dudit arbre due à la localisation des trous réalisés dans une platine ou un pont dans lesquels il est engagé, les jeux dans les pivots qui guident ledit arbre, les tolérances de planéité et de perpendicularité des afficheurs chassés sur ledit arbre, etc.

Des solutions ont été développées depuis de nombreuses années pour garantir un positionnement adéquat de l'arbre porteur des afficheurs afin d'éviter les inconvénients précités.

Notamment, une solution connue consiste à agencer un ressort clinquant sur l'arbre porteur des afficheurs afin de générer un couple de friction permettant de maitriser la position dudit arbre. Toutefois, l'intensité du couple de friction est complexe à maitriser, dans la mesure où elle dépend de l'épaisseur dudit ressort clinquant, de sa courbure ou encore des caractéristiques intrinsèques du matériau qui le constitue, et influence directement le rendement du mouvement horloger. Le document EP 2 977 829 A1 montre une surface de freinage que comporte au moins un sabot soumis à l'action d'au moins un premier moyen de rappel élastique, monobloc avec un arbre ou respectivement une roue, et agencé pour exercer un effort radial par rapport audit axe de pivotement sur une deuxième surface ou respectivement une première surface.

En plus de la position de l'arbre porteur, il convient de maitriser son déplacement afin d'éviter les flottements de l'afficheur dus aux jeux angulaires des engrenages entraînant l'arbre porteur.

### Résumé de l'invention

L'invention résout les inconvénients précités en proposant une solution permettant de maitriser la position d'un arbre porteur d'un afficheur afin d'éviter toute collision dudit afficheur avec un obstacle.

Plus particulièrement, la maitrise de la position de l'arbre porteur d'un afficheur sous-entend le contrôle de la position de l'inclinaison dudit arbre et de la position selon toutes les directions.

Un autre objectif de l'invention est de fournir un ressort frein dont la mise en place au sein d'un mouvement horloger est aisée.

À cet effet, la présente invention concerne un ressort frein destiné à appliquer une force radiale contre un arbre porteur d'un afficheur d'une montre. Le ressort frein comporte une lame élastique, un organe d'emboitage élastique adapté à être fixé à un organe d'accroche d'une structure d'un mouvement horloger, et un élément de retenue de la lame élastique configuré pour coopérer avec ladite lame élastique, de sorte à la maintenir dans une première position, ladite lame élastique étant apte à être libérée dudit élément de retenue de sorte à occuper une seconde position sous l'effet d'une force de rappel élastique, dans laquelle elle est apte à appliquer une force radiale résultante contre un arbre porteur d'un afficheur.

Grâce à ces caractéristiques, le ressort frein applique sur l'arbre porteur d'un afficheur un couple de freinage qui est maitrisé, de sorte à empêcher le flottement de l'afficheur et de garantir un positionnement adéquat de l'afficheur pour éviter tout contact avec un obstacle, tout en minimisant la baisse de rendement du mouvement horloger.

Avantageusement, le ressort frein peut être aisément fixé au mouvement horloger, grâce à l'organe d'emboitage élastique et à l'élément de retenue de la lame élastique.

Dans des modes particuliers de réalisation, l'invention peut comporter en outre l'une ou plusieurs des caractéristiques suivantes, prises isolément ou selon toutes les combinaisons techniquement possibles.

Dans des modes particuliers de réalisation, l'organe d'emboitage élastique comporte une mâchoire formée par deux parties définissant un logement et s'étendant chacune entre une première extrémité par laquelle lesdites parties sont reliées et forment un fond du logement, et une seconde extrémité par laquelle elles forment une ouverture dudit logement.

Dans des modes particuliers de réalisation, au moins une des parties est configurée de sorte que le logement comporte une portion étroite au niveau de son ouverture, adaptée à recevoir l'organe d'accroche en butée de sorte à fixer ledit ressort frein à la structure d'un mouvement horloger.

Dans des modes particuliers de réalisation, l'ouverture est évasée.

Dans des modes particuliers de réalisation, la lame élastique s'étend depuis la première extrémité d'une des parties de la mâchoire et en regard de l'ouverture de la mâchoire.

Dans des modes particuliers de réalisation, la lame élastique comprend une portion proximale par laquelle elle est reliée à la mâchoire, une portion distale, par laquelle elle coopère avec l'élément de retenue lorsqu'elle occupe la première position, et par laquelle elle est destinée à appliquer un effort radial contre l'arbre porteur d'un afficheur lorsqu'elle occupe la seconde position, les portions proximale et distale étant reliées l'une à l'autre par une portion intermédiaire s'étendant en regard de l'ouverture.

Dans des modes particuliers de réalisation, la lame élastique et l'élément de retenue sont agencés de part et d'autre de la mâchoire, respectivement sur chacune des parties de cette dernière.

Dans des modes particuliers de réalisation, l'élément de retenue est formé par un crochet configuré pour coopérer avec l'extrémité libre de la lame élastique.

Selon un autre aspect, la présente invention concerne un mouvement horloger comportant un ressort frein tel que décrit précédemment, et une structure comprenant un organe d'accroche avec lequel l'organe d'emboitage élastique coopère de sorte à fixer le ressort frein à ladite structure sans degré de liberté au moins lorsque la lame élastique occupe la seconde position.

Dans des modes particuliers de réalisation, la structure comprend un orifice traversant agencé pour déboucher en regard de la lame élastique lorsqu'elle occupe la première position.

Dans des modes particuliers de réalisation, l'organe d'accroche est formé par deux pièces saillantes s'étendant perpendiculairement par rapport à un plan formé par la structure.

Dans des modes particuliers de réalisation, les pièces saillantes comportent chacune, à leur extrémité libre, une collerette radiale agencée en regard du ressort frein.

Dans des modes particuliers de réalisation, une des pièces saillantes est agencée en butée contre les parties de la mâchoire, au niveau de la portion étroite, l'autre pièce saillante étant agencée en butée contre le fond du logement.

Encore un autre aspect de l'invention concerne un procédé d'installation d'un ressort frein tel que précédemment décrit sur une structure d'un mouvement horloger tel que précédemment décrit, comportant les étapes successives suivantes :
- fixation du ressort frein sur la structure du mouvement horloger ;
- maintien de la lame élastique dans une première position, dans laquelle ladite lame élastique est agencée de sorte à coopérer avec l'élément de retenue ;
- engagement de l'arbre à travers une ouverture de la structure ;
- libération de la lame élastique de l'élément de retenue de sorte que ladite lame élastique occupe une seconde position dans laquelle elle applique une force radiale contre un arbre porteur d'un afficheur du mouvement horloger.

Dans des modes particuliers de mise en œuvre, l'étape de fixation comporte une opération de mise en position dans laquelle le ressort frein est agencé contre la structure du mouvement horloger et une opération d'emboitage dans laquelle le ressort frein est déplacé contre ladite structure de sorte que l'organe d'emboitage élastique coopère par emboitage élastique avec l'organe d'accroche.

Dans des modes particuliers de mise en œuvre, l'étape de libération est réalisée par l'introduction d'un outil à travers un orifice traversant réalisé dans la structure du mouvement horloger, débouchant en regard de la lame élastique, afin que ledit outil exerce un effort sur ladite lame tendant à l'écarter de l'élément de retenue.

### Brève description des figures

D'autres caractéristiques et avantages de l'invention apparaîtront à la lecture de la description détaillée suivante donnée à titre d'exemple nullement limitatif, en référence aux dessins annexés dans lesquels :
- la figure 1 représente une vue en perspective d'un ressort frein selon un exemple préféré de réalisation de l'invention ;
- les figures 2 à 4 représentent une vue en perspective du ressort frein de la figure 1 à différentes étapes d'installation du ressort frein sur une structure d'un mouvement horloger.

### Description détaillée de l'invention

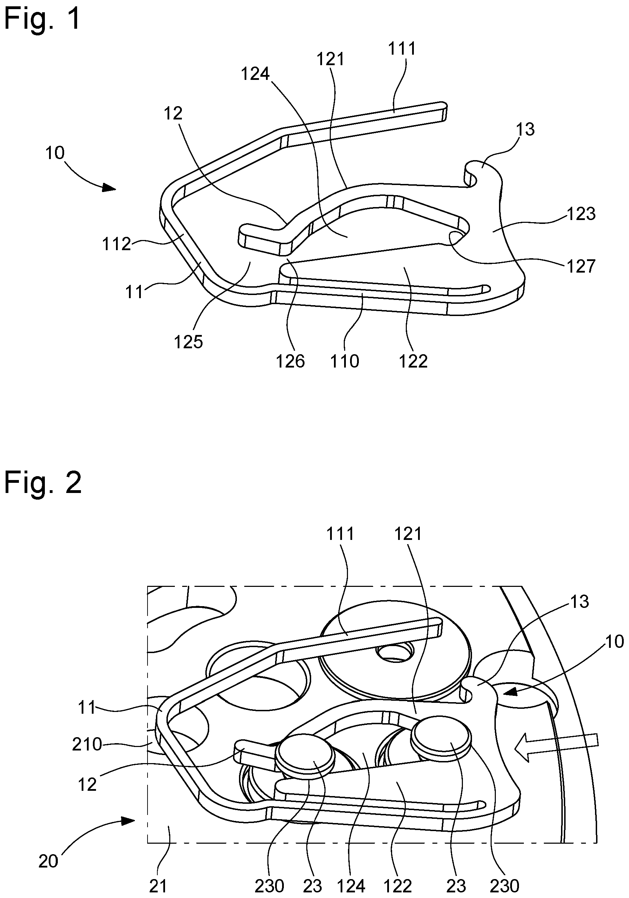

La figure 1 montre un exemple préféré de réalisation d'un ressort frein 10 selon l'invention, destiné à être fixé à une structure 21 d'un mouvement horloger 20 de sorte à appliquer une force radiale contre un arbre 22 porteur d'un afficheur d'une montre. Un tel afficheur peut être constitué par une aiguille, un disque, ou d'autres organes indicateurs.

Une telle structure 21 peut être formée par un pont, par une plaque de maintien ou par une platine du mouvement horloger 20. La structure 21 comporte une ouverture à travers laquelle est engagé l'arbre 22, de façon connu en soi par l'homme du métier.

Le ressort frein 10 comporte une lame élastique 11 reliée à un organe d'emboitage élastique 12 adapté à être fixé à un organe d'accroche 23 de la structure 21 du mouvement horloger 20.

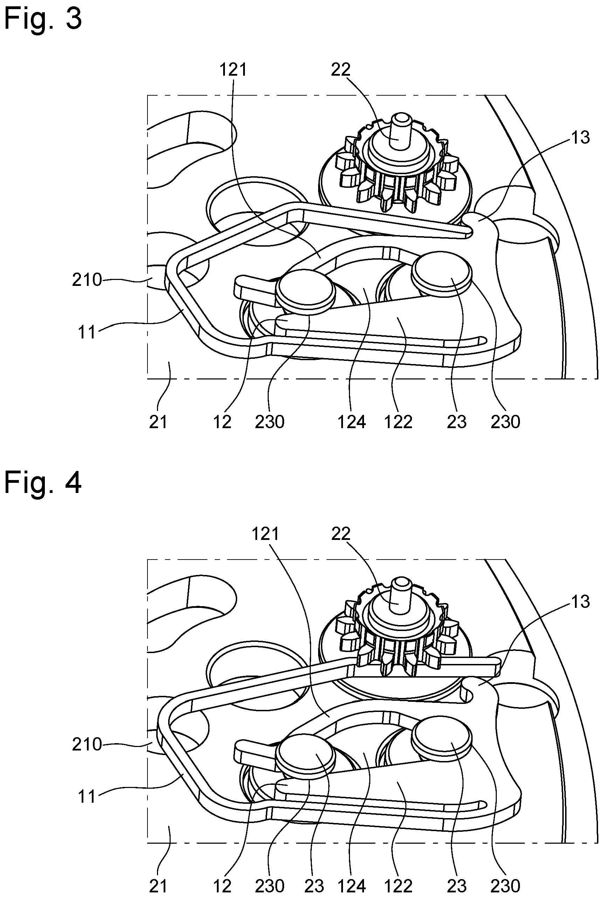

La lame élastique 11 est configurée pour coopérer, par une extrémité libre, avec un élément de retenue 13 relié à l'organe d'emboitage élastique 12, de sorte à maintenir ladite lame élastique 11 dans une première position, tel que visible sur la figure 3. Dans cette première position la lame élastique 11 est contrainte par l'élément de retenue 13, de sorte que sa liberté de mouvement soit faible, voire nulle.

Lorsque la lame élastique 11 est dans cette première position, il est possible d'installer le ressort frein 10 sans risque de conflit entre l'arbre 22 et la lame élastique 11.

La lame élastique 11 peut être libérée dudit élément de retenue 13, comme décrit ci-après en détail, de sorte à occuper, sous l'effet d'une force de rappel élastique, une seconde position visible sur la figure 4, dans laquelle elle est apte à appliquer une force radiale contre un arbre 22. Cette force radiale résulte de la force de rappel élastique de la lame élastique 11 et génère des frottements à l'origine d'un couple de freinage de l'arbre 22 porteur de l'afficheur, de façon bien connue en tant que telle par l'homme du métier.

Comme le montrent les figures 1 à 4, l'organe d'emboitage élastique 12 comporte une mâchoire formée par deux parties 121 et 122 s'étendant chacune entre une première extrémité par laquelle lesdites parties 121 et 122 sont reliées l'une à l'autre et forment un fond 123 d'un logement 124, et une seconde extrémité par laquelle elles forment une ouverture 125 dudit logement 124. Le logement 124 est défini entre les parties 121 et 122 de la mâchoire et est destiné à recevoir l'organe d'accroche 23 après son introduction à travers l'ouverture 125.

La mâchoire présente une capacité de déformation élastique dans la mesure où les parties 121 et 122 présentent un degré de mobilité en rotation l'une par rapport à l'autre de sorte à faire varier la dimension de l'ouverture 125 du logement 124, c'est-à-dire la distance séparant les secondes extrémités desdites deux parties 121 et 122. Une telle capacité élastique permet la fixation du ressort frein 10 sur la structure 21 du mouvement horloger 20, par emboitage élastique, comme décrit ci-après.

L'ouverture 125 du logement 124 peut avantageusement être évasée, de sorte à faciliter l'introduction de l'organe d'accroche 23 à travers ladite ouverture 125.

Par ailleurs, au moins une des parties 121 ou 122 peut être configurée de sorte que le logement 124 comporte une portion étroite 126, entre l'ouverture 125 et le fond 123, adaptée à recevoir l'organe d'accroche 23 en butée lorsque la mâchoire est fixée audit organe d'accroche 23, comme le montrent les figures 2 à 4. On entend par « portion étroite », une portion du logement 124 dans laquelle la distance séparant les parties 121 et 122 est réduite, telle que représenté sur les figures 1 à 4.

Ainsi, dans l'exemple préféré de réalisation de l'invention, les parties 121 et 122 de la mâchoire sont configurées de sorte que, depuis le fond 123 vers l'ouverture 125, la distance qui les sépare augmente jusqu'à un maximum, puis décroit jusqu'à un minimum correspondant à la portion étroite 126, puis augmente à nouveau.

Il y a lieu de noter que, du fait de ces caractéristiques, dans l'exemple préféré de réalisation représenté sur les figures 1 à 4, le logement 124 s'étend sensiblement selon un axe longitudinal.

Il y a également lieu de noter que, dans d'autres exemples de réalisation de l'invention, la forme du logement 124 défini par la mâchoire peut être différente que celle décrite précédemment.

Avantageusement, le logement 124 peut comporter une creusure 127, au niveau du fond 123, afin de loger l'organe d'accroche 23. Plus particulièrement, la forme de la creusure 127 peut correspondre à celle d'une partie de la périphérie de l'organe d'accroche 23, de sorte que la creusure 127 épouse la périphérie de l'organe d'accroche 23 pour garantir son maintien en position dans la mâchoire.

Lorsque le ressort frein 10 est fixé à la structure 21 du mouvement horloger 20, l'organe d'accroche 23 est alors en butée contre le fond 123, ou contre la creusure 127, et contre la portion étroite 126 du logement 124, comme visible sur les figures 2 à 4.

Ainsi, lorsque la mâchoire coopère par emboitage élastique avec l'organe d'accroche 23, le ressort frein 10 est lié à la structure 21 du mouvement horloger 20 sans degré de liberté.

Avantageusement, grâce au profil particulier de la mâchoire, la coopération par emboitage élastique est réversible, de sorte qu'il est possible de retirer le ressort frein 10 de la structure 21 du mouvement horloger 20, par exemple pour réaliser une opération de maintenance dudit mouvement horloger 20.

Dans l'exemple préféré de réalisation de l'invention, tel que représenté sur les figures 1 à 4, l'organe d'accroche 23 est formé par deux pièces saillantes s'étendant perpendiculairement par rapport à un plan formé par la structure 21.

De telles pièces saillantes peuvent être formées par des tenons ou des goupilles.

Les pièces saillantes comportent chacune, à leur extrémité libre, une collerette 230 radiale agencée en regard de chacune des parties 121 et 122 de la mâchoire lorsque le ressort frein 10 est fixé sur ladite structure 21. Cette collerette 230 permet avantageusement d'assurer le blocage de toute mobilité en translation du ressort frein 10 selon un axe perpendiculaire au plan formé par la structure 21, aux jeux mécaniques près. Ainsi, les collerettes 230 permettent d'éviter que le ressort frein 10 ne se désolidarise des pièces saillantes lors d'un éventuel choc de la montre.

Cette caractéristique participe à assurer le maintien en position du ressort frein 10 sur le mouvement horloger 20.

La lame élastique 11 et l'élément de retenue 13 sont préférentiellement agencés de part et d'autre de l'organe d'emboitage élastique 12, comme le montrent les figures 1 à 4 dans un exemple préféré de réalisation de la présente invention.

La lame élastique 11 s'étend depuis la première extrémité d'une des parties 122 de la mâchoire et en regard de l'ouverture 125 du logement 124 de la mâchoire, tel que visible sur les figures 1 à 4.

Plus précisément, dans l'exemple préféré de réalisation de l'invention, la lame élastique 11 comporte une portion proximale 110 par laquelle elle est reliée à la mâchoire et une portion distale 111, par laquelle elle coopère avec l'élément de retenue 13 lorsqu'elle occupe la première position, et par laquelle elle est destinée à appliquer un effort radial contre l'arbre 22 porteur de l'afficheur lorsqu'elle occupe la seconde position. Les portions proximale 110 et distale 111 sont reliées l'une à l'autre par une portion intermédiaire 112 s'étendant en regard de l'ouverture 125.

Les portions proximale 110, intermédiaire 112 et distale 111 sont coudées les unes par rapport aux autres de sorte que les portions distale 111 et proximale 110 sont sensiblement parallèles l'une à l'autre lorsque la lame élastique 11 est dans la première position.

Grâce à cette forme particulière de la lame élastique 11, la force appliquée contre l'arbre 22 présente une composante principale dont la direction est perpendiculaire à l'axe longitudinal selon lequel s'étend le logement 124 de la mâchoire, et coïncide sensiblement avec la première extrémité des parties 121 et 122, ce qui participe à garantir la bonne tenue de la fixation de la mâchoire sur la structure 21.

L'élément de retenue 13 est préférentiellement formé par un crochet configuré pour coopérer avec l'extrémité libre de la lame élastique 11. On comprend donc que le crochet s'étend depuis la première extrémité d'une des parties 121, à l'opposé de la portion proximale 110 de la lame élastique 11.

La structure 21 comprend avantageusement un orifice 210 traversant, par exemple de forme oblongue, agencé pour déboucher en regard de la lame élastique 11 lorsqu'elle est dans la première position. Une telle disposition permet de pouvoir exercer un effort sur la lame élastique 11 tendant à la dégager du crochet avec un outil engagé à travers ledit orifice 210, comme décrit plus en détail ci-après.

La présente invention concerne également, selon un autre aspect, un procédé d'installation du ressort frein 10 sur la structure 21 du mouvement horloger 20, comportant successivement les étapes de :
- fixation du ressort frein 10 sur la structure 21 du mouvement horloger 20 ; cette étape est réalisée par coopération par emboitage élastique de la mâchoire et des pièces saillantes en faisant coulisser ledit ressort frein 10 contre la structure 21 dans le sens de la flèche représentée sur la figure 2 ;
- maintien de la lame élastique 11 dans une première position dans laquelle ladite lame élastique 11 est agencée de sorte à coopérer avec l'élément de retenue 13 ;
- engagement de l'arbre 22 à travers une ouverture de la structure 21; ces étapes de maintien de la lame élastique 11 et d'engagement de l'arbre 22 sont illustrées sur la figure 3 ;
- libération de la lame élastique 11 de la contrainte exercée par l'élément de retenue 13, de sorte que ladite lame élastique 11, sous l'effet d'une force de rappel élastique, occupe la seconde position dans laquelle elle applique une force radiale contre l'arbre 22, comme le montre la figure 4.

Plus précisément, l'étape de fixation comporte une opération de mise en position dans laquelle le ressort frein 10 est agencé contre la structure 21 du mouvement horloger 20, comme représenté sur la figure 2, une des pièces saillantes étant agencée dans le logement 124 formé par la mâchoire et l'autre étant agencée entre la portion intermédiaire 112 de la lame élastique 11 et l'ouverture 125 du logement 124 de la mâchoire.

L'étape de fixation comporte ensuite une opération d'emboitage dans laquelle le ressort frein 10 est déplacé en translation selon l'axe longitudinal du logement 124 de sorte que l'une des pièces saillantes soit agencée contre le fond 123 du logement 124 et l'autre soit agencée contre la portion étroite 126 de celui-ci.

L'étape de libération est réalisée en introduisant un outil à travers l'orifice 210 traversant réalisé dans la structure 21 du mouvement horloger 20, et en exerçant avec ledit outil un effort sur la lame élastique 11 tendant à la dégager de l'élément de retenue 13.

Le ressort frein 10 peut être réalisé par toute méthode de fabrication appropriée, telle que par usinage, par moulage ou par fabrication additive.

Avantageusement, le ressort frein 10 est préférentiellement réalisé par méthode LIGA (de l'allemand « Röntgenlithographie, Galvanoformung, Abformung » signifiant en langue française « lithographie, galvanisation, formage »).

De manière plus générale, il est à noter que les modes de mise en œuvre et de réalisation considérés ci-dessus ont été décrits à titre d'exemples non limitatifs, et que d'autres variantes sont par conséquent envisageables.

Notamment, l'agencement de la lame élastique 11 par rapport à l'organe d'emboitage élastique 12 pourrait être différent de celui décrit ci-avant et représenté sur les figures 1 à 4.

## Revendications

1. Ressort frein (10) destiné à appliquer une force radiale contre un arbre (22) porteur d'un afficheur d'une montre comportant une lame élastique (11), un organe d'emboitage élastique (12) adapté à être fixé à un organe d'accroche (23) d'une structure (21) d'un mouvement horloger (20), et un élément de retenue (13) de la lame élastique (11) configuré pour coopérer avec ladite lame élastique (11), de sorte à la maintenir dans une première position, ladite lame élastique (11) étant apte à être libérée dudit élément de retenue (13) de sorte à occuper une seconde position sous l'effet d'une force de rappel élastique, dans laquelle elle est apte à appliquer une force radiale résultante contre l'arbre (22) porteur d'un afficheur.

2. Ressort frein (10) selon la revendication 1, dans lequel l'organe d'emboitage élastique (12) comporte une mâchoire formée par deux parties (121, 122) définissant un logement (124) et s'étendant chacune entre une première extrémité par laquelle lesdites parties (121, 122) sont reliées et forment un fond (123) du logement (124), et une seconde extrémité par laquelle elles forment une ouverture (125) dudit logement (124).

3. Ressort frein (10) selon la revendication 2, dans lequel au moins une des parties (121, 122) est configurée de sorte que le logement (124) comporte une portion étroite (126) au niveau de son ouverture (125), adaptée à recevoir l'organe d'accroche (23) en butée de sorte à fixer ledit ressort frein (10) à la structure (21) d'un mouvement horloger (20).

4. Ressort frein (10) selon l'une des revendications 2 ou 3, dans lequel l'ouverture (125) est évasée.

5. Ressort frein (10) selon l'une des revendications 2 à 4, dans lequel la lame élastique (11) s'étend depuis la première extrémité d'une des parties (121, 122) de la mâchoire et en regard de l'ouverture (125) de la mâchoire.

6. Ressort frein (10) selon la revendication 5, dans lequel la lame élastique (11) comprend une portion proximale (110) par laquelle elle est reliée à la mâchoire, une portion distale (111), par laquelle elle coopère avec l'élément de retenue (13) lorsqu'elle occupe la première position, et par laquelle elle est destinée à appliquer un effort radial contre l'arbre (22) lorsqu'elle occupe la seconde position, les portions proximale (110) et distale (111) étant reliées l'un à l'autre par une portion intermédiaire (112) s'étendant en regard de l'ouverture (125).

7. Ressort frein (10) selon la revendication 5 ou 6, dans lequel la lame élastique (11) et l'élément de retenue (13) sont agencés de part et d'autre de la mâchoire, respectivement sur chacune des parties (121, 122) de cette dernière.

8. Ressort frein (10) selon l'une des revendications 1 à 7, dans lequel l'élément de retenue (13) est formé par un crochet configuré pour coopérer avec l'extrémité libre de la lame élastique (11).

9. Mouvement horloger (20) **caractérisé en ce qu'**il comporte un ressort frein (10) selon l'une des revendications 1 à 8, et une structure (21) comprenant un organe d'accroche (23) avec lequel l'organe d'emboitage élastique (12) coopère de sorte à fixer le ressort frein (10) à ladite structure (21) sans degré de liberté au moins lorsque la lame élastique (11) occupe la seconde position.

10. Mouvement horloger (20) selon la revendication 9, dans lequel la structure (21) comprend un orifice (210) traversant agencé pour déboucher en regard de la lame élastique (11) lorsqu'elle occupe la première position.

11. Mouvement horloger (20) selon l'une des revendications 9 ou 10, dans lequel l'organe d'accroche (23) comporte, à son extrémité libre, une collerette (230) radiale agencée en regard du ressort frein (10).

12. Mouvement horloger (20) selon l'une des revendications 9 à 11, dans lequel l'organe d'accroche (23) est formé par deux pièces saillantes s'étendant perpendiculairement par rapport à un plan formé par la structure (21).

13. Mouvement horloger (20) selon la revendication 12, comprenant un ressort frein (10) selon la revendication 3, dans lequel une des pièces saillantes est agencée en butée contre les parties (121, 122) de la mâchoire, au niveau de la portion étroite (126), l'autre pièce saillante étant agencée en butée contre le fond (123) du logement (124).

14. Procédé d'installation d'un ressort frein (10) selon l'une des revendications 1 à 8 sur une structure (21) d'un mouvement horloger (20) selon l'une des revendications 9 à 13, **caractérisé en ce qu'**il comporte les étapes successives suivantes :
- fixation du ressort frein (10) sur la structure (21) du mouvement horloger (20) ;
- maintien de la lame élastique (11) dans une première position, dans laquelle ladite lame élastique (11) est agencée de sorte à coopérer avec l'élément de retenue (13) ;
- engagement de l'arbre (22) à travers une ouverture de la structure (21) ;
- libération de la lame élastique (11) de l'élément de retenue (13) de sorte que ladite lame élastique (11) occupe une seconde position dans laquelle elle applique une force radiale contre arbre (22) porteur d'un afficheur du mouvement horloger (20).

15. Procédé selon la revendication 14, dans lequel l'étape de fixation comporte une opération de mise en position dans laquelle le ressort frein (10) est agencé contre la structure (21) du mouvement horloger (20) et une opération d'emboitage dans laquelle le ressort frein (10) est déplacé contre ladite structure (21) de sorte que l'organe d'emboitage élastique (12) coopère par emboitage élastique avec l'organe d'accroche (23).

16. Procédé selon l'une des revendications 13 à 15, dans lequel l'étape de libération est réalisée par l'introduction d'un outil à travers un orifice (210) traversant réalisé dans la structure (21) du mouvement horloger (20), débouchant en regard de la lame élastique (11), afin que ledit outil exerce un effort sur ladite lame tendant à l'écarter de l'élément de retenue (13).

## Patentansprüche

1. Bremsfeder (10) zum Aufbringen einer Radialkraft gegen eine Welle (22), die eine Uhrenanzeige trägt, umfassend eine elastische Klinge (11), ein elastisches Gehäuseelement (12), das dazu geeignet ist, an einer Aufhängevorrichtung (23) einer Struktur (21) eines Uhrwerks (20) befestigt zu werden, und ein Halteelement (13) der elastischen Klinge (11), das so konfiguriert ist, dass es mit der elastischen Klinge (11) zusammenarbeitet, um sie in einer ersten Position zu halten, wobei die elastische Klinge (11) von der Halterung (13) gelöst werden kann, um eine zweite Position unter der Einwirkung einer elastischen Rückstellkraft einzunehmen, in der sie in der Lage ist, eine resultierende Radialkraft gegen die Welle (22) aufzubringen, die eine Anzeige trägt.

2. Bremsfeder (10) nach Anspruch 1, wobei das elastische Gehäuseelement (12) eine Spannvorrichtung aufweist, die aus zwei Teilen (121, 122) besteht, die einen Sitz (124) definieren, und die sich jeweils zwischen einem ersten Ende, durch das die Teile (121, 122) verbunden sind, und einem Boden (123) des Sitzes (124), und einem zweiten Ende, durch das sie eine Öffnung (125) dieses Sitzes (124) bilden, erstrecken.

3. Bremsfeder (10) nach Anspruch 2, wobei mindestens eines der Teile (121, 122) so ausgebildet ist, dass das Gehäuse (124) an seiner Öffnung (125) einen schmalen Abschnitt (126) aufweist, der zur Aufnahme der Aufhängungsvorrichtung (23) am Anschlag angepasst ist, sodass diese Bremsfeder (10) an der Struktur (21) eines Uhrwerks (20) befestigt werden kann.

4. Bremsfeder (10) nach einem der Ansprüche 2 oder 3, bei der die Öffnung (125) ausgeweitet ist.

5. Bremsfeder (10) nach einem der Ansprüche 2 bis 4, wobei sich die elastische Klinge (11) am ersten Ende eines der Teile (121, 122) der Spannvorrichtung und im Hinblick auf die Öffnung (125) der Spannvorrichtung erstreckt.

6. Bremsfeder (10) nach Anspruch 5, bei der die elastische Klinge (11) einen proximalen Abschnitt (110) umfasst, durch den sie mit der Spannvorrichtung verbunden ist, einen distalen Abschnitt (111), durch den sie mit dem Halteelement (13) zusammenwirkt, wenn sie die erste Position innehat, und wobei sie beim Einnehmen der zweiten Stellung eine Radialkraft gegen die Welle (22) aufbringen soll, wobei die proximalen (110) und distalen (111) Abschnitte über einen Zwischenabschnitt (112) miteinander verbunden sind, der sich gegenüber der Öffnung (125) erstreckt.

7. Bremsfeder (10) nach Anspruch 5 oder 6, wobei die elastische Klinge (11) und das Halteelement (13) auf beiden Seiten der Spannvorrichtung bzw. an jedem der Teile (121, 122) davon angeordnet sind.

8. Bremsfeder (10) nach einem der Ansprüche 1 bis 7, wobei das Halteelement (13) durch einen Haken gebildet wird, der für das Zusammenwirken mit dem freien Ende der elastischen Klinge (11) bestimmt ist.

9. Uhrwerk (20), **dadurch gekennzeichnet, dass** es eine Bremsfeder (10) nach einem der Ansprüche 1 bis 8 und eine Struktur (21) mit einer Aufhängevorrichtung (23) aufweist, mit der das elastische Gehäuseelement (12) so arbeitet, dass die Bremsfeder (10) an dieser Struktur (21) ohne Rückzugsminderung befestigt werden kann, und zwar bei Benutzung der zweiten Klinge (11).

10. Uhrwerk (20) nach Anspruch 9, wobei die Struktur (21) eine Durchgangsbohrung (210) aufweist, die so angeordnet ist, dass sie sich vor der elastischen Klinge (11) öffnet, wenn sie die erste Position einnimmt.

11. Uhrwerk (20) nach einem der Ansprüche 9 oder 10, bei der die Aufhängevorrichtung (23) am freien Ende einen vor der Bremsfeder (10) angeordneten radialen Flansch (230) aufweist.

12. Uhrwerk (20) nach einem der Ansprüche 9 bis 11, wobei die Aufhängevorrichtung (23) aus zwei vorspringenden Teilen ausgebildet ist, die sich senkrecht zu einer durch die Struktur (21) gebildeten Ebene erstrecken.

13. Uhrwerk (20) nach Anspruch 12, umfassend eine Bremsfeder (10) nach Anspruch 3, wobei eines der hervorstehenden Teile in einem Anschlag gegen die Teile (121, 122) des Achsschenkels an der schmalen Stelle (126) angeordnet ist, während das andere hervorstehende Teil in einem Anschlag gegen den Boden (123) des Sitzes (124) angeordnet ist.

14. Verfahren zum Einbau einer Bremsfeder (10) nach einem der Ansprüche 1 bis 8 an einer Struktur (21) eines Uhrwerks (20) nach einem der Ansprüche 9 bis 13, **dadurch gekennzeichnet, dass** es die folgenden aufeinanderfolgenden Schritte umfasst:
- Befestigung der Bremsfeder (10) an der Struktur (21) des Uhrwerks (20);
- Halten der elastischen Klinge (11) in einer ersten Position, wobei die elastische Klinge (11) so angeordnet ist, dass sie mit dem Halteelement (13) zusammenwirkt;
- Eingriff der Welle (22) durch eine Öffnung der Struktur (21);
- Lösen der elastischen Klinge (11) vom Halteelement (13) so, dass die elastische Klinge (11) eine zweite Position einnimmt, in der sie eine radiale Kraft gegen die Welle (22) ausübt, die eine Uhrwerkanzeige (20) trägt.

15. Verfahren nach Anspruch 14, wobei der Befestigungsschritt einen Positioniervorgang umfasst, bei dem die Bremsfeder (10) gegen die Struktur (21) des Uhrwerks (20) angeordnet ist, und einen Gehäuseschritt, bei dem die Bremsfeder (10) so gegen die Struktur (21) bewegt wird, dass das elastische Gehäuseelement (12) mit der Aufhängevorrichtung (23) zusammenwirkt.

16. Verfahren nach einem der Ansprüche 13 bis 15, bei dem der Freigabeschritt durch Einführen eines Werkzeugs durch eine Öffnung (210) in die Struktur (21) des Uhrwerks (20), die zur elastischen Klinge führt (11), durchgeführt wird, damit dieses Werkzeug eine Kraft auf diese Klinge ausübt, die dazu bestimmt ist, es vom Halteelement (13) zu entfernen.

## Claims

1. Brake spring (10) intended to apply a radial force against a supporting arbor (22) of a display of a watch including an elastic strip (11), an elastic casing organ (12) adapted to be fastened to an attachment organ (23) of a structure (21) of a horological movement (20), and a retaining element (13) of the elastic strip (11) configured to cooperate with said elastic strip (11), so as to hold it in a first position, said elastic strip (11) being capable of being released from said retaining element (13) so as to occupy a second position under the effect of an elastic return force, wherein it is capable of applying a resulting radial force against the supporting arbor (22) of a display.

2. Brake spring (10) according to claim 1, wherein the elastic casing organ (12) includes jaws formed by two portions (121, 122) defining a bed (124) and each extending between a first end by which said portions (121, 122) are connected and form a back (123) of the bed (124), and a second end by which they form an opening (125) of said bed (124).

3. Brake spring (10) according to claim 2, wherein at least one of the portions (121, 122) is configured so that the bed (124) includes a narrow portion (126) at its opening (125), adapted to receive the attachment organ (23) in abutment so as to fasten said brake spring (10) to the structure (21) of a horological movement (20).

4. Brake spring (10) according to one of claims 2 or 3, wherein the opening (125) is flared.

5. Brake spring (10) according to one of claims 2 to 4, wherein the elastic strip (11) extends from the first end of one of the portions (121, 122) of the jaws and opposite the opening (125) of the jaws.

6. Brake spring (10) according to claim 5, wherein the elastic strip (11) comprises a proximal portion (110) by which it is connected to the jaws, a distal portion (111), by which it cooperates with the retaining element (13) when it occupies the first position, and by which it is intended to apply a radial load against the arbor (22) when it occupies the second position, the proximal (110) and distal portions (111) being connected to one another by an intermediate portion (112) extending opposite the opening (125).

7. Brake spring (10) according to claim 5 or 6, wherein the elastic strip (11) and the retaining element (13) are arranged on either side of the jaws, respectively on each of the portions (121, 122) of the latter.

8. Brake spring (10) according to one of claims 1 to 7, wherein the retaining element (13) is formed by a hook configured to cooperate with the free end of the elastic strip (11).

9. Horological movement (20) **characterised in that** it includes a brake spring (10) according to one of claims 1 to 8, and a structure (21) comprising an attachment organ (23) with which the elastic casing organ (12) cooperates so as to fasten the brake spring (10) to said structure (21) without degree of freedom at least when the elastic strip (11) occupies the second position.

10. Horological movement (20) according to claim 9, wherein the structure (21) comprises a through-hole (210) arranged to open opposite the elastic strip (11) when it occupies the first position.

11. Horological movement (20) according to one of claims 9 or 10, wherein the attachment organ (23) includes, at its free end, a radial flange (230) arranged opposite the brake spring (10).

12. Horological movement (20) according to one of claims 9 to 11, wherein the attachment organ (23) is formed by two protruding parts extending perpendicularly in relation to a plane formed by the structure (21).

13. Horological movement (20) according to claim 12, comprising a brake spring (10) according to claim 3, wherein one of the protruding parts is arranged in abutment against the portions (121, 122) of the jaws, at the narrow portion (126), the other protruding part being arranged in abutment against the back (123) of the bed (124).

14. Method for installing a brake spring (10) according to one of claims 1 to 8 on a structure (21) of a horological movement (20) according to one of claims 9 to 13, **characterised in that** it includes the following successive steps of:
- fastening the brake spring (10) on the structure (21) of the horological movement (20);
- holding the elastic strip (11) in a first position, wherein said elastic strip (11) is arranged so as to cooperate with the retaining element (13);
- engaging the arbor (22) through an opening of the structure (21);
- releasing the elastic strip (11) from the retaining element (13) so that said elastic strip (11) occupies a second position wherein it applies a radial force against a supporting the arbor (22) of a display of the horological movement (20).

15. Method according to claim 14, wherein the fastening step includes a positioning operation wherein the brake spring (10) is arranged against the structure (21) of the horological movement (20) and a casing operation wherein the brake spring (10) is moved against said structure (21) so that the elastic casing organ (12) cooperates by elastic casing with the attachment organ (23).

16. Method according to one of claims 13 to 15, wherein the release step is performed by inserting a tool through a through-hole (210) made in the structure (21) of the horological movement (20), opening opposite the elastic strip (11), in order that said tool exerts a load on said strip tending to move it apart from the retaining element (13).
